# EUROPÄISCHE PATENTANMELDUNG

(11) **EP 2 502 819 A1**
(43) Veröffentlichungstag der Anmeldung: **26.09.2012**
(21) Anmeldenummer: 11002494.0
(22) Anmeldetag: 25.03.2011
(51) Int. Cl.: B62M 6/55

(54) **Elektrischer Hilfsantreib für Fahrräder**

(71) Anmelder: Gruber Antrieb GmbH & Co KG, 6300 Wörgl (AT)
(72) Erfinder: Schweitzer, Karl, A-6320 Angerberg (AT)
(74) Vertreter: Bauer, Friedrich

(57) **Zusammenfassung**

Ein elektrischer Hilfsantrieb für Fahrräder weist einen Elektromotor (3) und eine Kraftübertragungseinrichtung zur Übertragung der Motorantriebskraft zu einer Kurbelwelle (8) des Fahrrads auf. Die Kraftübertragungseinrichtung zwischen Elektromotor (3) und Kurbelwelle (8) weist eine Rutschkupplung (14) zum Verringern oder Aufheben der Drehmomentübertragung bei Überlast auf.

## Beschreibung

Die Erfindung betrifft einen elektrischen Hilfsantrieb für Fahrräder gemäß dem Oberbegriff des Anspruchs 1.

Ein derartiger Hilfsantrieb ist aus der DE 2006 032 016 A1 bekannt. Der Motor dieses Hilfsantriebs ist sehr kompakt ausgebildet und zusammen mit dem zugehörigen Getriebe im Sattelrohr des Fahrrads untergebracht, wobei der Motor über ein Kegelradgetriebe direkt auf die Kurbelwelle der Tretkurbel einwirkt und den Fahrer beim Treten unterstützt. Übliche Motoren dieser Art haben beispielsweise etwa 100 bis 200 Watt und werden über beispielsweise am Fahrradsattel befestigte Akkus mit Strom versorgt. Der große Vorteil derartiger Hilfsantriebe ist, dass sie sehr leicht und in praktisch jedes übliche Sattelrohr einbaubar sind, so dass sie das Gesamtgewicht des Fahrrads nur geringfügig erhöhen und optisch nicht sichtbar sind. Weiterhin können handelsübliche Fahrräder, insbesondere Montainbikes, mit derartigen Hilfsantrieben ohne weiteres nachgerüstet werden.

Bei derartigen Hilfsantrieben ist jedoch problematisch, dass durch plötzliches, abruptes Abbremsen des Hinterrades bei laufendem Motor die Kräfte in der Kraftübertragungseinrichtung des Hilfsantriebs so groß werden können, dass sie zu einer Zerstörung von Bauteilen führen können. Diese Gefahr besteht auch, wenn ein hinten liegendes Pedal mit großer Kraft nach unten gedrückt wird. Durch diese Rückwärtsdrehung schließt der in der Kraftübertragungseinrichtung vorhandene Freilauf, so dass der Antrieb stark beschleunigt wird, was ebenso wie das schlagartige Abbremsen zu einem Bruch von Bauteilen führen kann.

Der Erfindung liegt die Aufgabe zugrunde, einen elektrischen Hilfsantrieb der eingangs genannten Art zu schaffen, mit dem eine Beschädigung von Bauteilen aufgrund einer von außen einwirkenden, plötzlich auftretenden Überlast vermieden werden kann.

Diese Aufgabe wird erfindungsgemäß durch einen elektrischen Hilfsantrieb mit den Merkmalen des Anspruchs 1 gelöst. Vorteilhafte Ausführungsformen der Erfindung sind in den weiteren Ansprüchen beschrieben.

Erfindungsgemäß weist die Kraftübertragungseinrichtung zwischen Elektromotor und Kurbelwelle eine Rutschkupplung zum Verringern oder Aufheben der Drehmomentübertragung bei Überlast auf.

Der erfindungsgemäße Hilfsantrieb bietet den Vorteil, dass Beschädigungen von Bauteilen des elektrischen Hilfsantriebs aufgrund plötzlich auftretender, von außen einwirkender Kräfte, insbesondere durch plötzliches starkes Abbremsen oder durch plötzliches, schnelles Rückwärtsdrehen der Pedale, zuverlässig verhindert werden können. Übersteigt das Drehmoment in der Kraftübertragungseinrichtung eine vorbestimmte Höhe, kommt es zu einem Durchrutschen der Rutschkupplung und einer entsprechenden Verringerung des übertragenen Drehmoments.

Gemäß einer vorteilhaften Ausführungsform umfasst die Rutschkupplung bei Hilfsantrieben, die über einen Freilauf mit einer Freilaufhülse verfügen, eine bei Überlast zumindest teilweise lösbare Kraft- und/oder Formschlussverbindung zwischen der Freilaufhülse und der Getriebeausgangswelle. Dies kann in relativ einfacher Weise so gestaltet werden, dass die Gesamtlänge der Kraftübertragungseinrichtung nicht oder nicht wesentlich vergrößert wird.

Zweckmäßigerweise ist an der Getriebeausgangswelle ein Flansch befestigt oder ausgebildet, der in lösbarer Kraft- und/oder Formschlussverbindung mit einer senkrecht zur Drehachse der Freilaufhülse angeordneten ersten Reibfläche der Freilaufhülse ist. Ein derartige Flansch kann somit entweder an einem von der Getriebeausgangswelle separaten Teil ausgebildet sein, das an der Getriebeausgangswelle befestigt wird, oder auch direkt an der Getriebeausgangswelle, d.h. integral mit dieser ausgebildet sein. Darüber hinaus bietet eine derartige Ausgestaltung den Vorteil, dass die gesamte Kraftübertragungseinrichtung derart gestaltet wird, dass sie sehr wenig Einbauraum beansprucht.

Gemäß einer vorteilhaften Ausführungsform ist der Flansch zumindest in der Nähe des freien Endes der Getriebeausgangswelle angeordnet, wobei die Antriebswelle koaxial an die Getriebeausgangswelle anschließt und die Freilaufhülse sich zumindest über einen Teilabschnitt der Antriebswelle und über den Flansch erstreckt, und wobei sich die erste Reibfläche an einem Endabschnitt der Freilaufhülse befindet, der relativ zum benachbarten Abschnitt der Freilaufhül radial nach innen vorsteht. Durch eine derartige koaxiale Anordnung der einzelnen Teile der Kraftübertragungseinrichtung und die damit verbundene Integration der Rutschkupplung in den Freilauf kann eine sehr einfache, platzsparende Anordnung geschaffen werden.

Alternativ hierzu ist es jedoch auch möglich, den Flansch nicht am freien Ende der Getriebeausgangswelle anzuordnen, sondern in einem getriebenahen Abschnitt der Getriebeausgangswelle, wobei dann die Freilaufhülse durch geeignete Mittel derart axial in Richtung Getriebe gedrängt wird, dass die äußere Stirnfläche der Freilaufhülse am Flansch anliegt.

Zweckmäßiger Weise ist zwischen Flansch und erster Reibfläche der Freilaufhülse ein erster Reibbelag vorgesehen. Bei einem derartigen Reibbelag handelt es sich vorteilhafterweise um eine oder mehrere Scheiben, welche den Flansch bzw. die erste Reibfläche vollflächig kontaktiert/kontaktieren und lose am Flansch und an der ersten Reibfläche anliegt/anliegen. Es ist jedoch auch möglich, den Reibbelag entweder mit dem Flansch oder mit der ersten Reibfläche fest zu verbinden und/oder den Reibbelag nur an bestimmten Stellen der Umfangsfläche des Flansches oder der ersten Reibfläche vorzusehen.

Gemäß einer vorteilhaften Ausführungsform ist der die erste Reibfläche aufweisende Endabschnitt der Freilaufhülse mittels einer Feder axial gegen den Flansch vorgespannt. Mittels der Federkraft der Feder kann damit dasjenige Drehmoment eingestellt werden, bis zu dem die Drehverbindung zwischen Antriebswelle und Getriebeausgangswelle starr bleibt, während bei einem durch eine Überlast verursachten höheren Drehmoment die starre Drehverbindung getrennt und ein gegenseitiges Verdrehen von Antriebswelle und Getriebeausgangswelle ermöglicht wird.

Vorzugsweise handelt es sich bei der Feder um mindestens eine Tellerfeder, welche die Getriebeausgangswelle bzw. Flanschhülle umgibt.

Gemäß einer vorteilhaften Ausführungsform ist die axiale Vorspannung mittels einer Vorspannmutter einstellbar, die auf ein Gewinde der Getriebeausgangswelle oder Flanschhülse aufschraubbar ist. Die Vorspannkraft der Feder kann auf diese Weise sehr einfach eingestellt werden, indem die Vorspannmutter mehr oder weniger weit auf das Gewinde aufgeschraubt wird.

Gemäß einer besonders vorteilhaften Ausführungsform ist an der der ersten Reibfläche gegenüberliegenden Stirnseite der Freilaufhülse eine zweite, zur ersten Reibfläche parallele Reibfläche vorgesehen, die über einen zweiten Reibbelag mit einer Mitnehmerscheibe in Druckkontakt ist, die drehfest auf der Flanschhülse oder Getriebeausgangswelle angeordnet ist. Durch eine derartige zweite Reibfläche kann die insgesamt zur Verfügung stehende Reibfläche vergrößert werden, wodurch die übertragbaren Drehmomente vergrößert oder die erforderlichen Federkräfte verringert werden.

Zweckmäßiger Weise sind der zweite Reibbelag und die Mitnehmerscheibe axial verschiebbar zwischen Feder oder Freilaufhülse angeordnet und mittels der Feder axial gegen die zweite Reibfläche der Freilaufhülse vorgespannt. Hierdurch lässt sich mittels einer einseitig angeordneten Feder gleichzeitig sowohl die axiale Druckkraft zwischen Flansch und erster Reibfläche als auch zwischen zweiter Reibfläche und Mitnehmerscheibe aufbringen und gegebenenfalls einstellen.

Die Erfindung wird nachfolgend anhand der Zeichnungen beispielhaft näher erläutert. Es zeigen:
- Figur 1:: eine schematische Darstellung des in einem Sattelrohr angeordneten elektrischen Hilfsantriebs gemäß der Erfindung;
- Figur 2:: einen Längsschnitt durch den erfindungsgemäßen Hilfsantrieb im Bereich der Antriebs- und Getriebeausgangswelle; und
- Figur 3:: einen Schnitt längs der Linie III-III von Figur 2.

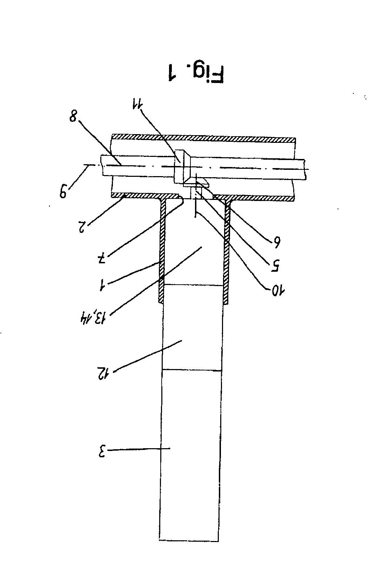

In Figur 1 ist schematisch ein Schnitt durch einen Fahrradrahmen im Übergangsbereich zwischen einem Sattelrohr 1 und einem Kurbelgehäuse 2 dargestellt.

Im verkürzt dargestellten Sattelrohr 1 ist ein Elektromotor 3 untergebracht, der über eine Antriebswelle 5 ein Kegelrad 6 antreibt. Die Antriebswelle 5 erstreckt sich durch eine Öffnung 7 im Kurbelgehäuse 2 hindurch, so dass sich das Kegelrad 6 innerhalb des Kurbelgehäuses 2 befindet.

Das Kurbelgehäuse 2 ist - wie es üblicherweise bei Fahrrädern der Fall ist - quer zum Sattelrohr 1 angeordnet und rohrförmig ausgebildet. Innerhalb des Kurbelgehäuses 2 erstreckt sich eine Kurbelwelle 8, an deren beiden Enden nicht dargestellte Tretkurbeln befestigbar sind. Die Kurbelwelle 8 ist um eine Drehachse 9 mittels nicht dargestellter Lager im Kurbelgehäuse 2 drehbar gelagert. Diese Drehachse 9 erstreckt sich quer zur Drehachse 10 der Antriebswelle 5 und des Kegelrads 6. Die beiden Drehachsen 9, 10 kreuzen somit einander.

Das Kegelrad 6 erstreckt sich nach unten fast bis zur querverlaufenden Kurbelwelle 8, hält zu dieser jedoch einen geringen, aus der Zeichnung nicht ersichtlichen Abstand ein, um eine Berührung auszuschließen.

Um die Drehbewegung des Kegelrades 6 auf die Kurbelwelle 8 zu übertragen, ist das Kegelrad 6 mit einem weiteren Kegelrad 11 in Eingriff, das drehfest und axial unverschiebbar auf der Kurbelwelle 8 befestigt ist.

Wie weiterhin schematisch aus Figur 1 ersichtlich, sind zwischen dem Elektromotor 3 und dem Kurbelgehäuse 2 ein Getriebe 12 und ein Freilauf 13 angeordnet. Der Freilauf 13 umfasst dabei - wie später näher ausgeführt wird - eine Rutschkupplung 14 zur Begrenzung bzw. Verringerung des übertragenen Drehmoments. Die Teile zwischen dem Elektromotor 3 und der Kurbelwelle 8 bilden eine Kraftübertragungseinrichtung, mit der die Motorantriebskraft bzw. das am Ausgang des Elektromotors 3 zur Verfügung stehende Drehmoment auf die Kurbelwelle 8 übertragen wird.

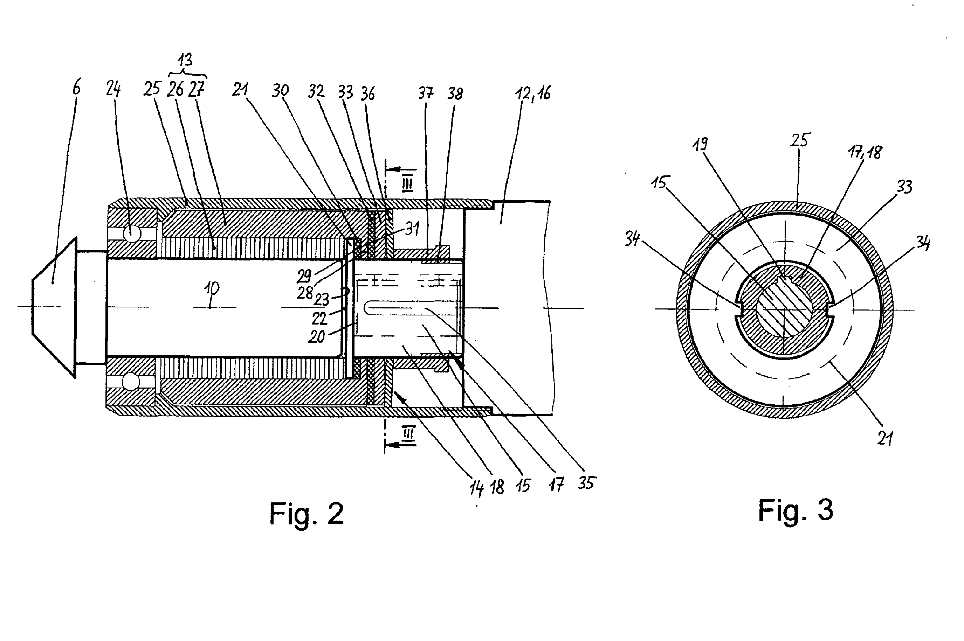

Die Verbindung zwischen Getriebe 12 und Antriebswelle 5, der Freilauf 13 sowie die Rutschkupplung 14 werden im folgenden anhand der Figuren 2 und 3 näher erläutert.

Getriebe 12 und Elektromotor 3 sind koaxial miteinander verbunden. Das Getriebe 12 weist nicht dargestellte Zahnräder auf, um die Drehzahl des Elektromotors 3 zu untersetzen. Die untersetzte Drehbewegung wird auf eine Getriebeausgangswelle 15 übertragen, die koaxial über das Getriebegehäuse 16 übersteht.

Auf der Getriebeausgangswelle 15 ist eine Flanschhülse 17 drehfest angeordnet. Hierzu weist die Flanschhülse 17 einen rohrförmigen Befestigungsabschnitt 18 auf, der mittels einer Nut- und Federverbindung 19 drehfest mit der Getriebeausgangswelle 15 verbunden ist. Am stirnseitigen Ende des Befestigungsabschnitts 18, das zum freien Ende 20 der Getriebeausgangswelle 15 unmittelbar benachbart ist, weist die Flanschhülse 17 einen Flansch 21 auf, der radial nach außen über den Befestigungsabschnitt 18 vorsteht. Dieser Flansch 21 kann beispielsweise durch eine Ringscheibe oder vollflächige Scheibe gebildet werden, die stirnseitig am Befestigungsabschnitt 18 angeschweißt wird oder einstückig mit diesem geformt ist.

Die Flanschhülse 17 ist derart ausgebildet und angeordnet, dass sie nur geringfügig, und zwar im wesentlichen nur um die Dicke des Flansches 21, axial über die Getriebeausgangswelle 15 vorsteht. Ist der Flansch 21 als Ringscheibe ausgebildet, kann die Getriebeausgangswelle 15 an ihrem vorderen Ende sogar in den Flansch 21 hineinragen, so dass die vordere (linke) Stirnseite 22 des Flansches 21 nach vorne nicht über die vordere Stirnseite der Getriebeausgangswelle 15 vorragt oder diesbezüglich sogar zurückversetzt ist. Durch die Flanschhülse 17 wird somit die Länge der Getriebeausgangswelle 15 nicht wesentlich oder überhaupt nicht verlängert.

Die Antriebswelle 5 ist koaxial zur Getriebeausgangswelle 15 und damit zur Flanschhülse 17 angeordnet. Weiterhin erstreckt sich die Antriebswelle 5 vom Kegelrad 6 bis in die Nähe des Flansches 21, ohne dass die Stirnseite 23 der Antriebswelle 5 den Flansch 21 kontaktieren würde.

Mittels eines Kugellagers 24 ist die Antriebswelle 5 in einem rohrförmigen Freilaufgehäuse 25 drehbar gelagert, das am anderen Ende mit dem Getriebegehäuse 16 verschraubt ist.

Der Freilauf 13 ist innerhalb des Freilaufgehäuses 25 angeordnet. Der Freilauf 13 bewirkt, dass die Kraftübertragung zwischen Elektromotor 3 und Kurbelwelle 8 des Fahrrads nur in einer Richtung erfolgen kann, und zwar so, dass der Elektromotor 3 bzw. das damit verbundene Getriebe 12 die Kurbelwelle 8 antreibt, wenn der Motor eine Umdrehungsgeschwindigkeit erreicht hat, die der Umdrehungsgeschwindigkeit der Kurbelwelle 8 entspricht. Bewegt der Fahrer dagegen die Pedale schneller als der Elektromotor 3 die Getriebeausgangswelle 15, bewirkt der Freilauf, dass der Elektromotor 3 von der Antriebswelle 5 nicht zusätzlich angetrieben wird. Der Fahrer kann somit auch bei abgeschaltetem Elektromotor 3 die Pedale bewegen, ohne dass der Elektromotor 3 mitbewegt wird.

Wie aus Figur 2 ersichtlich, umfasst der Freilauf 13 lediglich ein schematisch dargestelltes Freilaufinnenteil 26, das um die Antriebswelle 5 herum angeordnet ist, sowie eine äußere Freilaufhülse 27, welche das Freilaufinnenteil 26 sowie die Antriebswelle 5 koaxial umgibt.

Die Freilaufhülse 27 ist hohlzylinderförmig ausgebildet und erstreckt sich in axialer Richtung über das Freilaufinnenteil 26 und damit über den wesentlichen Teil der Länge der Antriebswelle 5. Weiterhin erstreckt sich die Freilaufhülse 27 auch über den Flansch 21 hinaus etwas in Richtung des Getriebes 12, so dass sie auch die Flanschhülse 17 etwas überlappt.

Die Rutschkupplung 14 umfasst neben dem Flansch 21 eine in der Freilaufhülse 27 angeordnete innere Durchmesserstufe mit verringertem Innendurchmesser, wodurch ein radial nach innen vorstehender Bund 28 gebildet wird, der den Flansch 21 axial hintergreift. Die dem Flansch 21 zugewandte und zu diesem parallele Bundfläche bildet eine erste Reibfläche 29. Zwischen dem Bund 28 und dem Flansch 21 ist ein erster Reibbelag 30 in Form einer Ringscheibe vorgesehen. Wird nun - wie nachfolgend noch näher erläutert wird - der Bund 28 der Freilaufhülse 27 axial gegen den ersten Reibbelag 30 und damit gegen den Flansch 21 der Flanschhülse 17 gedrückt, können aufgrund der erzeugten Reibung Drehmomente in vorbestimmter Höhe vom Flansch 21 auf die Freilaufhülse 27 übertragen werden, ohne dass sich die Freilaufhülse 27 relativ zur Flanschhülse 17 dreht.

Die der ersten Reibfläche 29 gegenüberliegende Stirnseite der Freilaufhülse 27 bildet eine zweite Reibfläche 31. An dieser zweiten Reibfläche 31 liegt ein zweiter, scheibenförmiger Reibbelag 32 an, der die Flanschhülse 17 axial verschiebbar umgibt. Am zweiten Reibbelag 31 liegt wiederum eine Mitnehmerscheibe 33 an, welche axial verschiebbar auf der Flanschhülse 17 angeordnet, jedoch drehfest mit dieser verbunden ist. Die Drehverbindung kann beispielsweise über zwei diametral gegenüberliegende, radial nach innen vorspringende Stege 34 der Mitnehmerscheibe 33 erfolgen, die in entsprechende Axialnuten 35 der Flanschhülse 17 eingreifen.

An der Mitnehmerscheibe 33 liegt eine Feder 36 in Form einer Tellerfeder an, die axial verschiebbar auf der Flanschhülse 17 angeordnet ist. Diese Feder 36 wird mittels einer Vorspannmutter 37 nach vorne in Richtung Flansch 31 gedrückt. Die Vorspannmutter 37 ist auf ein Gewinde 38 der Flanschhülse 17 aufgeschraubt, so dass durch mehr oder weniger weites Aufschrauben die Axialposition der Vorspannmutter 37 relativ zum Flansch 21 und damit die Vorspannkraft eingestellt werden kann, mittels der der Scheibenverbund, bestehend aus erstem Reibbelag 30, Bund 28, zweitem Reibbelag 32 und Mitnehmerscheibe 33, gegen den Flansch 21 gedrückt werden kann. Die axiale Vorspannkraft bestimmt damit die Reibkräfte zwischen Flansch 21, Freilaufhülse 27 und Mitnehmerscheibe 33 und damit die Drehmomente, die von der Flanschhülse 17 und damit vom Elektromotor 3 auf die Freilaufhülse 27, und umgekehrt, übertragen werden können.

Das Freilaufinnenteil 26 ist in üblicher Weise ausgebildet und wird daher im vorliegenden Zusammenhang nicht näher beschrieben. Das Freilaufinnenteil 26 umfasst beispielsweise Klemmrollen, Klemmkörper oder Sperrklinken, die in bekannter Weise mit der Freilaufhülse 27 derart zusammenwirken, dass eine starre Drehkopplung zwischen Antriebswelle 5 und Freilaufhülse 27 nur in einer Drehrichtung erfolgt, während in der entgegengesetzten Drehrichtung die Antriebswelle 5 von der Freilaufhülse 27 entkoppelt ist. Die erfindungsgemäße Rutschkupplung 14 bewirkt, dass einerseits das maximale vom Elektromotor 3 erzeugte Drehmoment sicher und ohne Schlupf auf die Freilaufhülse 27 und von dieser auf die Antriebswelle 5 übertragen werden kann, und dass andererseits, wenn über die Antriebswelle 5 ein unerwünscht hohes Drehmoment eingeleitet wird, die Rutschkupplung 14 durchrutscht und die starre Drehverbindung zwischen Freilaufhülse 27 und Flanschhülse 17 löst. Eine Beschädigung von Teilen des elektrischen Hilfsantriebs kann dadurch zuverlässig vermieden werden.

Die Rutschkupplung 14 besteht im folgenden Ausführungsbeispiel somit aus einer bei Überlast zumindest teilweise lösbaren Kraftschlussverbindung zwischen Freilaufhülse 27 und Flanschhülse 17, wobei die mögliche Drehmomentübertragung von der Reibkraft abhängt, die zwischen diesen Teilen wirkt. Da die Flanschhülse 17 drehfest mit der Getriebeausgangswelle 15 und damit mit dem Getriebe 12 und dem Elektromotor 3 verbunden ist, stellt die Rutschkupplung 14 auch eine bei Überlast zumindest teilweise lösbare Kraftschlussverbindung zwischen der Freilaufhülse 27 und der Getriebeausgangswelle 15 bzw. dem Elektromotor 3 dar. Anstelle oder zusätzlich zu einer derartigen Kraftschlussverbindung ist es jedoch auch möglich, eine Formschlussverbindung zwischen den bei Überlast durchrutschenden Teilen vorzusehen, beispielsweise in Form von ineinander greifenden Zähnen, Rampenflächen etc.

Im Rahmen der Erfindung ist eine Vielzahl von weiteren Variationen möglich. Beispielsweise ist es grundsätzlich nicht erforderlich, dass hinter der Freilaufhülse 27 der zweite Reibbelag 32 und die Mitnehmerscheibe 33 vorgesehen sind, falls bereits über die erste Reibfläche 29 und den Flansch 21 genügt hohe Reibkräfte erzeugt werden können, um ein unabsichtliches Durchrutschen der Rutschkupplung 14 zu vermeiden. In diesem Fall kann die Feder 36 direkt an der hinteren Stirnfläche der Freilaufhülse 27 anliegen.

Weiterhin ist es auch möglich, nicht nur eine Feder 36 zu verwenden, sondern ein aus mehreren Federn bestehendes Federpaket, insbesondere in Form von Tellerfedern, um einen längeren Federweg zu erhalten.

Weiterhin ist auch eine Ausführungsform denkbar, bei der der Flansch 21 nicht an einer separaten Flanschhülse 17 befestigt, sondern direkt an der Getriebeausgangswelle 15 angebracht ist. Der Flansch 21 könnte auch weiter in Richtung des Getriebegehäuses 16 angeordnet sein, wobei sich dann die gesamte Freilaufhülse 27 vor dem Flansch 21 befindet und die hintere Stirnfläche, die der zweiten Reibfläche 31 entspricht, gegen die vordere Seite des Flansches 21 bzw. gegen einen dazwischenliegenden Reibbelag gedrückt wird.

## Patentansprüche

1. Elektrischen Hilfsantrieb für Fahrräder, mit einem Elektromotor (3) und einer Kraftübertragungseinrichtung zur Übertragung der Motorantriebskraft zu einer Kurbelwelle (8) des Fahrrads, wobei die Kraftübertragungseinrichtung ein Getriebe (12) mit einer Getriebeausgangswelle (15) und eine von der Getriebeausgangswelle (15) antreibbare Antriebswelle (5) umfasst, die mit der Kurbelwelle (8) des Fahrrads drehgekoppelt ist, **dadurch gekennzeichnet, dass** die Kraftübertragungseinrichtung zwischen Elektromotor (3) und Kurbelwelle (8) eine Rutschkupplung (14) zum Verringern oder Aufheben der Drehmomentübertragung bei Überlast aufweist.

2. Hilfsantrieb nach Anspruch 1, **dadurch gekennzeichnet, dass** die Kraftübertragungseinrichtung einen Freilauf (13) mit einer Freilaufhülse (27) aufweist, und dass die Rutschkupplung (14) eine bei Überlast zumindest teilweise lösbare Kraft- und/oder Formschlussverbindung zwischen der Freilaufhülse (27) und der Getriebeausgangswelle (15) umfasst.

3. Hilfsantrieb nach Anspruch 2, **dadurch gekennzeichnet, dass** an der Getriebeausgangswelle (15) ein Flansch (21) befestigt oder ausgebildet ist, der in lösbarer Kraft- und/oder Formschlussverbindung mit einer senkrecht zur Drehachse (10) der Freilaufhülse (27) angeordneten ersten Reibfläche (29) der Freilaufhülse (27) ist.

4. Hilfsantrieb nach Anspruch 3, **dadurch gekennzeichnet, dass** der Flansch (21) zumindest in der Nähe des freien Endes der Getriebeausgangswelle (15) angeordnet ist, dass die Antriebswelle (5) koaxial an die Getriebeausgangswelle (15) anschließt, dass sich die Freilaufhülse (27) zumindest über einen Teilabschnitt der Antriebswelle (5) und über den Flansch (21) erstreckt, und dass sich die erste Reibfläche (29) an einem radial nach innen vorstehenden Bund (28) der Freilaufhülse (27) befindet.

5. Hilfsantrieb nach Anspruch 3 oder 4, **dadurch gekennzeichnet, dass** zwischen Flansch (21) und erster Reibfläche (29) der Freilaufhülse (27) ein erster Reibbelag (30) vorgesehen ist.

6. Hilfsantrieb nach einem der Ansprüche 3 bis 5, **dadurch gekennzeichnet, dass** der Flansch (21) aus einem radial vorstehenden Abschnitt einer Flanschhülse (17) besteht, die drehfest mit der Getriebeausgangswelle (15) verbindbar ist.

7. Hilfsantrieb nach einem der Ansprüche 3 bis 6, **dadurch gekennzeichnet, dass** der die erste Reibfläche (29) aufweisende Bund (28) der Freilaufhülse (27) mittels einer Feder (36) axial gegen den Flansch (21) vorgespannt ist.

8. Hilfsantrieb nach Anspruch 7, **dadurch gekennzeichnet, dass** die axiale Vorspannung mittels einer Vorspannmutter (37) einstellbar ist, die auf ein Gewinde (38) der Getriebeausgangswelle (15) oder der Flanschhülse (17) aufschraubbar ist.

9. Hilfsantrieb nach einem der Ansprüche 3 bis 8, **dadurch gekennzeichnet, dass** an der der ersten Reibfläche (29) gegenüberliegenden Stirnseite der Freilaufhülse (27) eine zweite Reibfläche (31) vorgesehen ist, die über einen zweiten Reibbelag (32) mit einer Mitnehmerscheibe (33) in Druckkontakt ist, die drehfest auf der Flanschhülse (17) oder Getriebeausgangswelle (15) angeordnet ist.

10. Hilfsantrieb nach Anspruch 9, **dadurch gekennzeichnet, dass** der zweite Reibbelag (32) und die Mitnehmerscheibe (33) axial verschiebbar zwischen Feder (36) und Freilaufhülse (27) angeordnet und mittels der Feder (36) axial gegen die zweite Reibfläche (31) der Freilaufhülse (27) vorgespannt sind.
